# EUROPÄISCHE PATENTSCHRIFT

(11) **EP 3 626 764 B1**
(45) Veröffentlichungstag und Bekanntmachung des Hinweises auf die Patenterteilung: **24.02.2021**
(21) Anmeldenummer: 18195870.3
(22) Anmeldetag: 21.09.2018
(51) Int. Cl.: C08J 5/04, B32B 5/02, E21B 17/01

(54) **COMPOSITE MIT THERMOPLASTISCHER MATRIX**
COMPOSITE WITH THERMOPLASTIC MATRIX
COMPOSITE À MATRICE THERMOPLASTIQUE

(43) Veröffentlichungstag der Anmeldung: 25.03.2020
(73) Patentinhaber: Evonik Operations GmbH, 45128 Essen (DE)
(72) Erfinder: FRANOSCH, Jürgen, 45770 Marl (DE); SZENTIVANYI, Andreas, 45134 Essen (DE); RIES, Hans, 45772 Marl (DE); BEYER, Horst, 45770 Marl (DE)
(74) Vertreter: Evonik Patent Association

(56) Entgegenhaltungen:
- EP-A1- 3 069 875
- EP-A1- 3 345 749
- EP-A2- 0 673 762
- FR-A1- 2 918 082

## Beschreibung

Die vorliegende Erfindung ist auf endlosfaserverstärkte Composites mit einer Matrix aus modifiziertem PVDF gerichtet. Das Composite kann ein Halbzeug oder ein daraus hergestelltes Produkt oder Fertigteil sein. Ein erfindungsgemäßes Produkt ist Langfasergranulat, während ein erfindungsgemäßes Fertigteil insbesondere ein thermoplastisches Compositrohr ist.

Composites mit PVDF-Matrix sind bekannt; entsprechende Typen mit Glasfaser- beziehungsweise Carbonfaserverstärkung sind kommerziell erhältlich. Allerdings ist die Haftung zwischen Faser und PVDF-Matrix unzureichend, was zu ungenügenden mechanischen Eigenschaften führt. Ein weiterer Nachteil ist, dass keine direkte Haftung zwischen dem Composite und damit im Verbund stehenden Bauteilen erzielt werden kann. In US 2011/0166278 und WO 2016/142630 werden Composites mit einer PVDF-Matrix beschrieben, zu deren Herstellung eine Mischung aus PVDF und einem ungesättigten Monomer hergestellt, mit energiereicher Strahlung bestrahlt wird und dann der nicht reagierte Anteil des ungesättigten Monomeren entfernt wird. Diese Herstellungsweise ist jedoch umständlich und teuer und nicht ohne weiteres in den Produktionsmaßstab umsetzbar.

Ein Aspekt der zugrundeliegenden Aufgabe besteht daher darin, einfacher herzustellende Composites mit PVDF-Matrix und guter Faser-Matrix-Haftung bereitzustellen.

Derartige Composites sind wegen der flammhemmenden Wirkung des PVDF von hohem Interesse beispielsweise für den Flugzeug- oder Fahrzeugbau. Sie sind insbesondere auch für den Einsatz als Verstärkungslage in Thermoplastic Composite Pipes (TCP) interessant, da sie aus der Umgebung beziehungsweise dem geförderten Medium weniger Kohlenwasserstoffe, Wasser oder Methanol aufnehmen als Composites mit Polyamidmatrix und vor allem auch in Gegenwart derartiger Stoffe höher temperaturbelastet werden können. Ähnliches gilt für den Vergleich mit Composites mit Polyolefinmatrix.

Flexible Thermoplastic Composite Pipes bestehen zumindest aus einem innenliegenden Linerrohr aus einem thermoplastischen Polymeren, einer darauf aufgebrachten mehrschichtigen Wickellage aus Endlosfaser-Tapes, die mit einer thermoplastischen Matrix getränkt sind, sowie einer äußeren Schutzschicht aus einem thermoplastischen Material. Sind diese Schichten stoffschlüssig miteinander verbunden, spricht man auch von einem Bonded Composite Flexible Pipe. Derartige Rohre werden meist für die Offshore-Ölförderung eingesetzt. Insbesondere für die Verwendung bei größeren Wassertiefen, aber auch zur sicheren Verbindung derartiger Rohre mit den jeweiligen Anbindungselementen wie etwa Endfittings sowie für Montage- und Verlegearbeiten ist eine stoffschlüssige Verbindung aller genannten Schichten miteinander von großem Vorteil.

TCPs werden in der WO 1995/007428 und der WO 1999/067561 beschrieben. Ihre Herstellung wird darüber hinaus in der WO 2002/095281, der WO 2006/107196, der WO 2012/118378, der WO 2012/118379 und der WO 2013/188644 offenbart. Bei den bisher bekannten TCPs bestehen in der Regel das Material des innenliegenden Linerrohres (beziehungsweise bei mehrschichtigen Linern das Material der Liner-Außenschicht), das Matrixmaterial des Tapes und das Material der außenliegenden Schutzschicht ("jacket" oder "cover sheet") aus dem gleichen Polymeren, um so eine sehr gute Verschmelzung und Haftung der Wickellagen miteinander sowie mit dem Liner und der Schutzschicht erzielen zu können. Es handelt sich hier - abhängig von maximaler Einsatztemperatur und Anwendungsfall - meist um TCPs auf Basis von Polyethylen, Polypropylen oder PA12 beziehungsweise PA11. Bei niedrigen Anwendungstemperaturen, etwa unterhalb von 50 °C, kommen in der Regel Polyolefine zum Einsatz, darüber PA11 oder PA12. Bei Anwendungen, bei denen die Temperatur des zu führenden Fluids 80 °C überschreitet, kommen bei Temperaturen bis etwa 135 °C im Regelfall PVDF-Homopolymere oder PVDF-Copolymere als Liner zum Einsatz. Liegt die Begrenzung für den Einsatz einer polymeren Innenschicht nicht in der Betriebstemperatur, sondern in der chemischen Beständigkeit des Polymeren begründet, reicht in der Regel lediglich eine dünne innenliegende und gegenüber dem Fluid beständige Schutzschicht als Liner aus, die ebenfalls aus PVDF-Homo- oder -copolymeren bestehen kann.

Bei den derzeit in Entwicklung befindlichen TCPs kommen vorzugsweise einschichtige Liner aus PA12 oder PEEK und in Kombination mit diesen Glas- oder Kohlenstofffasertapes mit einer Matrix aus dem gleichen Polymer zum Einsatz. Wegen seiner speziellen Eigenschaften und wegen der hohen Materialkosten wird PEEK jedoch nur dort eingesetzt, wo extreme Anforderungen an Temperatur- und Chemikalienbeständigkeit gestellt werden. Im mittleren Temperaturbereich kommen Liner aus PVDF oder PA12 und Tapes mit PA12-Matrix zum Einsatz. Allerdings haftet ein PA12-Tape nicht ohne Weiteres mit der erforderlichen Haftkraft auf einem PVDF-Liner. Dieses Problem kann gelöst werden, indem beispielsweise ein mehrschichtiger Liner mit einer inneren Schicht aus PVDF, einer Haftvermittlerschicht und einer PA12-Außenschicht hergestellt wird. Bei einem derartigen Aufbau werden jedoch drei Schichtgrenzflächen erzeugt (PVDF/Haftvermittler, Haftvermittler/PA12, PA12/Tape), die unter extremen Betriebsbedingungen zu Schwachstellen werden können (siehe unter Anderem DNV-GL Recommended Practice RP F119 "Thermoplastic Composite Pipes"). Es muss also Ziel sein, die Anzahl an kritischen Schichtgrenzflächen in einem derartigen TCP auf ein Minimum zu reduzieren.

Ein weiterer Aspekt der zugrundeliegenden Aufgabe besteht daher darin, Thermoplastic Composite Pipes mit einem Minimum an Schichtgrenzflächen mit einer oder mehreren Verstärkungslagen aus einem einfach herzustellenden Composite mit PVDF-Matrix und guter Faser-Matrix-Haftung bereitzustellen.

Die erfindungsgemäßen Composites, die erfindungsgemäßen Formkörper wie z.B. die Thermoplastic Composite Pipes (TCP) enthaltend die erfindungsgemäßen Composites sowie die erfindungsgemäße Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit aufgeführt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Der erste Aspekt der zugrundeliegenden Aufgabe wird gelöst durch den Gegenstand der vorliegenden Anmeldung, der ein Composite aus einer Polymermatrix und darin eingebetteten Endlosfasern ist,
wobei die Polymermatrix zu mindestens 80 Gew-%, bevorzugt zu mindestens 85 Gew-%, besonders bevorzugt zu mindestens 90 Gew-% und insbesondere bevorzugt zu mindestens 95 Gew-% aus einer Mischung besteht, die folgende Komponenten enthält:
a) als Hauptkomponente, das heißt zu mindestens 50 Gew.-Teilen niedrigviskoses PVDF sowie
b) 1 bis 50 Gew.-Teile, bevorzugt 1,5 bis 40 Gew.-Teile, mehr bevorzugt 2 bis 30 Gew.-Teile, besonders bevorzugt 2,5 bis 20 Gew.-Teile und insbesondere bevorzugt 3 bis 10 Gew.-Teile eines Acrylatcopolymers, wobei das Acrylatcopolymer 1 bis 30 Gew.-%, bevorzugt 2 bis 25 Gew.-%, besonders bevorzugt 4 bis 20 Gew.-% und insbesondere bevorzugt 5 bis 15 Gew.-% Einheiten mit Carbonsäureanhydridgruppen enthält,
   wobei die Summe der Gew.-Teile von a) und b) 100 ergibt, und
wobei weiterhin der Volumenanteil der Endlosfasern im Composite 10 bis 80 %, vorzugsweise 15 bis 75 %, mehr bevorzugt 20 bis 70 %, weiter mehr bevorzugt 25 bis 65 %, besonders bevorzugt 30 bis 60 %, und insbesondere bevorzugt 35 bis 55 % beträgt;
wobei die Prozentangaben der Matrix und der Endlosfasern sich jeweils auf die Gesamtmasse bzw. Gesamtvolumen der Verstärkungslage beziehen.

In EP 0673762A2 (US 5554426A) wird offenbart, dass PVDF und Acrylatcopolymer miteinander verträglich und homogen mischbar sind und als Blend gut auf einer Polyamidschicht haften. Weiterhin wird dort erwähnt, dass diese Formmasse elektrisch leitfähig eingestellt werden kann, insbesondere durch Zusatz von Ruß, Kohlenstofffasern und ähnlichem. Die Leitfähigkeitszusätze dienen nicht der Verstärkung, in den Beispielen wird lediglich Ruß verwendet. Eine Faser-Matrix-Haftung wird nicht offenbart. Bei der betreffenden Schicht der EP 0673762A2 handelt es sich daher nicht um ein Composite im Sinne dieser Erfindung.

Das erfindungsgemäße Composite ist ein Faserverbundwerkstoff, der als Halbzeug vorliegen kann, oder ein daraus hergestelltes Fertigteil. Ein Halbzeug liegt direkt nach der Herstellung als Strang vor, der jede gewünschte Geometrie besitzen kann. Er kann beispielsweise eine Folie, ein Tape, eine Platte, ein Rundprofil, ein Rechteckprofil oder ein komplexes Profil sein.

Endlosfasern sind solche, die eine Länge von mehr als 50 mm besitzen. In der Regel sind sie noch wesentlich länger. Im Rahmen der Erfindung werden sie als Roving oder als Gewebe eingesetzt. Grundsätzlich sind alle Fasern von ausreichender Länge geeignet, deren Erweichungstemperatur und thermische Beständigkeit oberhalb der Verarbeitungstemperatur der Matrixformmasse von etwa 250 °C liegt; es können anorganische Fasern, Polymerfasern sowie Naturfasern sowie Kombinationen untereinander eingesetzt werden. Beispiele geeigneter Fasern sind Metallfasern, Glasfasern, bevorzugt Glasfasern aus S1-Glas, S2-Glas, Kohlenstofffasern, metallisierte Kohlenstofffasern, Borfasern, keramische Fasern (z. B. aus Al₂O₃ oder SiO₂), Basaltfasern, Siliciumcarbidfasern, Kaliumtitanat-Fasern, Aramidfasern, Fasern aus flüssigkristallinem Polyester, Polyacrylnitrilfasern sowie Fasern aus Polymeren wie Polyimid, Polyetherimid, Polyphenylensulfid, Poly-p- Phenylen Benzobisoxazol (PBO), Polyetherketon, Polyetheretherketon und dergleichen. Glasfasern sollten vorzugsweise kein Boroxid oder Titandioxid enthalten, da diese ggf. zu autokatalytischem Abbau des PVDF führen. Glasfasern, die Stoffe mit ähnlichen Eigenschaften enthalten sind bevorzugt ebenfalls ausgeschlossen. Der Querschnitt der Fasern kann beispielsweise kreisförmig, rechteckig, oval, elliptisch oder kokonförmig sein. Mit Fasern, deren Querschnitt von der Kreisform abweicht (beispielsweise Flachglasfasern), kann ein höherer Faserfüllgrad im Fertigteil und damit eine höhere Festigkeit erzielt werden. Kommerziell erhältliche Fasern enthalten meist an ihrer Oberfläche eine Schlichte, die funktionelle Gruppen zur Anbindung an eine Polymermatrix zur Verfügung stellt. Für den Zweck der Erfindung kann eine Schlichte hilfreich sein, sie ist aber grundsätzlich nicht erforderlich. Bevorzugt werden Fasern verwendet, die eine Schlichte aufweisen, mehr bevorzugt ist die Schlichte reaktiv gegenüber der Polymermatrix. Bevorzugt sind Kohlenstofffasern, mehr bevorzugt sind Kohlenstofffasern, die eine Schlichte aufweisen. Insbesondere bevorzugt sind Kohlenstofffasern, die eine Schlichte aufweisen, wobei die Schlichte Epoxygruppen enthält.

Mehr bevorzugt weist das Composite 20 bis 60 Vol.-%, besonders bevorzugt 30 bis 55 Vol.-% und insbesondere bevorzugt 40 bis 50 Vol.-% bezogen auf das Composite an Kohlenstofffasern auf.

Weiter mehr bevorzugt weist das Composite 30 bis 55 Vol.-% Kohlenstofffasern mit einer Epoxyschlichte auf, bezogen auf das Composite auf.

PVDF ist dem Fachmann als Polyvinylidenfluorid bekannt und in einer Vielzahl von Typen handelsüblich. PVDF kann ein Homopolymer oder ein Copolymer sein. Erfindungsgemäß können als Polyvinylidenfluorid Copolymere auf Basis von Vinylidenfluorid eingesetzt werden, die bis zu 40 Gew.-% andere Einheiten aufweisen, welche sich aus den Monomere Trifluorethylen, Chlortrifluorethylen, Ethylen, Propen und Hexafluorpropen ableiten. Bevorzugt ist das Polyvinylidenfluorid ein Homopolymer des Vinylidenfluorids.

Bevorzugt ist das PVDF ein niedrigviskoses PVDF, bevorzugt weist das niedrigviskose PVDF einen melt flow index (MFI) von 18 bis 50 Gramm/10 min, bevorzugt 20 bis 45 Gramm/10 min bei Verwendung von 2,16 kg (230 °C) auf, wobei der MFI nach ASTM D1238 bestimmt wird.

PVDF mit niedrigerem MFI führen zu einer schlechteren Imprägnierung des Fasermaterials und zu einer Erhöhung der Porosität der Polymermatrix. Weiterhin sind nur geringere Anteile an Fasermaterial in einem Composite realisierbar. In Summe führt der niedrigere MFI also zu einer Verschlechterung der mechanischen Eigenschaften des Composites. Diese Eigenschaften lassen sich z.B. mittels ASTM 2344D bestimmen.

Das Acrylatcopolymer b) enthält bevorzugt folgende Einheiten:
I. 14 bis 80 Gew.-%, bevorzugt 20 bis 70, mehr bevorzugt 30 bis 65, insbesondere bevorzugt 40 bis 60 Gew.-% Estereinheiten der Formel 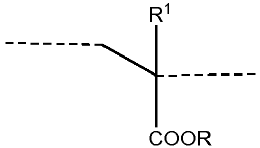 mit R = Methyl, Ethyl, Propyl oder Butyl, R¹ = Wasserstoff oder Methyl;
II. 10 bis 75 Gew.-%, bevorzugt 20 bis 65, mehr bevorzugt 25 bis 50 und insbesondere bevorzugt 30 bis 40 Gew.-% Imideinheiten der Formel 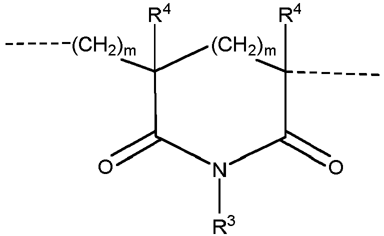
   mit R⁴ unabhängig voneinander aliphatische oder alicyclische Reste mit 1 bis 8 C-Atomen, bevorzugt mit 1 bis 4 C-Atomen, mehr bevorzugt Wasserstoff oder Methyl, und R³ unabhängig voneinander Methyl, Ethyl, Propyl, Butyl oder Phenyl;
   bevorzugt sind sowohl R³ als auch R⁴ gleich Methyl;
   m ist gleich 0 oder 1;
III. 1 bis 20 Gew.-%, mehr bevorzugt 1,5 bis 15 und insbesondere bevorzugt 2 bis 5 Gew.-% Säureeinheiten der Formel 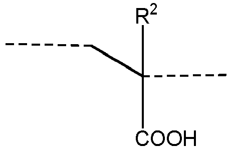 mit R² = Wasserstoff oder Methyl;
IV. 1 bis 30 Gew.-%, bevorzugt 2 bis 25, mehr bevorzugt 4 bis 20, insbesondere bevorzugt 5 bis 15 Gew.-% Säureanhydrideinheiten der Formel 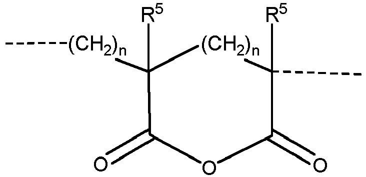
   mit R⁵ unabhängig voneinander aliphatische oder alicyclische Reste mit 1 bis 8 C-Atomen, bevorzugt mit 1 bis 4 C-Atomen, mehr bevorzugt Wasserstoff oder Methyl;
   n ist gleich 0 oder 1;
   wobei die Einheiten nach I, II, III und IV in der Summe 100 Gew.-% ergeben.

Das Acrylatcopolymer b) kann zusätzlich weitere Einheiten enthalten, beispielsweise solche, die sich von Maleinsäurediestern, Fumarsäurediestern, Itaconsäureestern, Vinylacetat, Vinylpyrrolidon, Vinylchlorid, Acrylnitril, Acrylamid, Styrol oder Ethen herleiten, solange die Verträglichkeit mit dem PVDF sowie die gewünschte haftvermittelnde Wirkung dadurch nicht wesentlich beeinträchtigt wird.

Die Limitierung der Kettenlänge für die Substituenten R¹, R², R⁴ und R⁵ ist darin begründet, dass längere Alkylreste zu einer erniedrigten Glasübergangstemperatur und damit zu einer verringerten Wärmeformbeständigkeit führen. Dies mag im Einzelfall in Kauf genommen werden; derartige Ausführungsformen liegen zumindest im Äquivalenzbereich der Erfindung.

Die Estereinheiten gemäß I leiten sich beispielsweise von Methylacrylat, Ethylacrylat, n-Butylacrylat, Methylmethacrylat, n-Propylmethacrylat oder i-Butylmethacrylat her, wobei Methylmethacrylat bevorzugt ist.

Die Imideinheiten gemäß II leiten sich im Falle m = 0 von gegebenenfalls substituierten Maleinimiden her wie Maleinimid, N-Methylmaleinimid, N-Ethylmaleinimid, N-Phenylmaleinimid oder N-Methylcitraconsäureimid. Im Falle m = 1 leiten sie sich durch Umsetzung zweier in einem Polymeren benachbarter Einheiten der Formel gemäß I oder III mit Ammoniak oder einem primären Amin unter Imidbildung her.

Die Säureeinheiten gemäß III leiten sich von Acrylsäure oder Methacrylsäure her.

Bevorzugt leiten sich die Anhydrideinheiten nach IV (für n = 0) von ungesättigten Dicarbonsäureanhydriden wie Maleinsäureanhydrid, Methacrylsäureanhydrid und Acrylsäureanhydrid ab, besonders bevorzugt von Methacrylsäureanhydrid. Im Falle n = 1 leiten sie sich durch Wasserabspaltung aus zwei in einem Polymeren benachbarten Einheiten gemäß III unter Ringschluss her.

Weitere Anhydrideinheiten können sich von Itaconsäureanhydrid und Aconitsäure ableiten.

Mehr bevorzugt weist das Acrylatcopolymer b) ausschließlich die Einheiten nach I, II, III und IV auf.

Bevorzugt sind die Reste R¹, R², R⁴ und R⁵ des Acrylatcopolymers alle gleich, mehr bevorzugt alle Methyl.

Wegen der Anwesenheit von Einheiten gemäß II. werden derartige Copolymere als Polyacrylimide bzw. Polymethacrylimide oder manchmal auch als Polyglutarimide bezeichnet. Es handelt sich hierbei um Produkte ausgehend von Polyalkylacrylaten bzw. Polyalkylmethacrylaten, bei denen zwei benachbarte Carboxylatgruppen zu einem cyclischen Säureimid umgesetzt worden sind. Die Imidbildung wird vorzugsweise mit Ammoniak bzw. primären Aminen, wie z. B. Methylamin, in Gegenwart von Wasser durchgeführt, wobei die Einheiten gemäß III. und IV. durch Hydrolyse mit entstehen.

Die Produkte sowie ihre Herstellung sind bekannt (Hans R. Kricheldorf, Handbook of Polymer Synthesis, Part A, Verlag Marcel Dekker Inc. New York-Basel-Hongkong, S. 223 f; H. G. Elias, Makromoleküle, Hüthig und Wepf Verlag Basel-Heidelberg-New York ; US 2 146 209; US 4 246 374).

Bevorzugt weist das Acrylatcopolymer 40 bis 60 Gew.-% Einheiten I, 30 bis 40 Gew.-% Einheiten II, 2 bis 5 Gew.-% Einheiten III und 5 bis 15 Gew.-% Einheiten IV auf.

Bevorzugt enthält die Polymermatrix niedrigviskoses PVDF und 2 bis 30 Gew.-%Teile, besonders bevorzugt 2,5 bis 20 Gew.-% und insbesondere bevorzugt 3 bis 10 Gew.-% eines Acrylatcopolymers, bezogen auf die Polymermatrix, wobei das Acrylatcopolymer 40 bis 60 Gew.-% Einheiten I, 30 bis 40 Gew.-% Einheiten II, 2 bis 5 Gew.-% Einheiten III und 5 bis 15 Gew.-% Einheiten IV aufweist, in Summe Einheiten I, II, III und IV gleich 100.

Bevorzugt weisen die erfindungsgemäßen Composites 30 bis 55 Vol.-%, bezogen auf das Composite, Kohlenstofffasern mit einer Epoxidharzschlichte in einer Polymermatrix aus einem niedrigviskosen Homo-PVDF und 5 bis 10 Gew.-% eines Acrylatcopolymers, bezogen auf die Polymermatrix, wobei das Acrylatcopolymer 40 bis 60 Gew.-% Einheiten I, 30 bis 40 Gew.-% Einheiten II, 2 bis 5 Gew.-% Einheiten III und 5 bis 15 Gew.-% Einheiten IV aufweist, in Summe Einheiten I, II, III und IV gleich 100.

Die verschiedenen Einheiten des Acrylatcopolymers, insbesondere die Einheiten I, II, III und IV sind statistisch verteilt. Statistische Verteilungen sind blockweise aufgebaut mit einer beliebigen Anzahl an Blöcken und einer beliebigen Sequenz oder sie unterliegen einer randomisierten Verteilung, sie können auch alternierend aufgebaut sein oder auch über die Polymerkette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Die Polymermatrix kann neben dem niedrigviskosen PVDF und dem Acrylatcopolymer übliche Hilfs- und Zusatzstoffe wie z. B. Schlagzähmodifikatoren (etwa Acrylatkautschuk), Flammschutzmittel, Stabilisatoren, Weichmacher, Verarbeitungshilfsmittel, Farbstoffe, Pigmente oder ähnliches enthalten. Die Menge der genannten Mittel ist so zu dosieren, dass die gewünschten Eigenschaften, insbesondere in Bezug auf die Bindung der Fasermaterialien zur Matrix, nicht wesentlich beeinträchtigt werden.

Die Herstellung der Polymermatrix erfolgt nach den üblichen und bekannten Verfahren durch Schmelzemischen der Komponenten in einem gut knetenden Mischaggregat, wie z. B. einem Doppelschneckenkneter, bei Temperaturen, die sich nach den Schmelzpunkten der Komponenten richten, im allgemeinen bei Temperaturen zwischen 200 und 300 °C.

Das erfindungsgemäße Composite kann nach Verfahren des Standes der Technik hergestellt werden. Die Herstellung unidirektional endlosfaserverstärkter Tapes wird beispielsweise in der EP 0056703A1, der US 5002712A, der US 4883625A, der US 2014/0191437A1, der

US 2013/0333788A1 und der WO 2014/140025 näher beschrieben. Mögliche Herstellungsmethoden ausgehend von Rovings oder Geweben sind beispielsweise Schmelzeauftrag, Imprägnieren mit einer Polymerlösung und Entfernen des Lösemittels, Folienimprägnierung oder Pulverimprägnierung (US 2018/001516A1, WO 2016/156222, WO 2016/173886).

Das auf diese Weise erhaltene Composite kann bei geeigneter Form bereits das Endprodukt sein. In den anderen Fällen ist es ein Halbzeug, das mit Hilfe geeigneter Formgebungsverfahren zum Fertigteil weiterverarbeitet werden kann. Beispielhafte Fertigteile sind Konstruktionsteile für Flugzeuge, Raketen oder Kraftfahrzeuge oder Thermoplastic Composite Pipes, die ein solches Composite als Verstärkungslage enthalten.

Darüber hinaus kann ein als Strang erhaltenes Composite zu langfaserverstärktem Stäbchengranulat mit einer Länge von 4 bis 60 mm, vorzugsweise 5 bis 50 mm, besonders bevorzugt 6 bis 40 mm, insbesondere bevorzugt 5 bis 30 mm und ganz besonders bevorzugt 6 bis 25 mm geschnitten werden. Bei diesem langfaserverstärkten Stäbchengranulat sind die Verstärkungsfasern in Axialrichtung angeordnet und erstrecken sich von der ersten Schnittfläche zur zweiten Schnittfläche.

Aus diesem Granulat können dann Formteile mittels Spritzgießen, Extrusion, Pressen oder anderer gebräuchlicher Formgebungsverfahren hergestellt werden, wobei besonders gute Eigenschaften des Formteils mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden werden. Beim Spritzguss bedeutet dies, dass bevorzugt Schnecken mit großem Durchmesser und tiefem Kompressionsverhältnis sowie großzügig dimensionierte Düsen- und Angusskanäle zum Einsatz kommen. Ergänzend sollte dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden Formteile erhalten, die im Mittel eine höhere Faserlänge aufweisen als vergleichbare Formteile hergestellt aus kurzfaserverstärkten Formmassen. Hierdurch wird eine deutliche Verbesserung der Eigenschaften, insbesondere beim Zug-E-Modul, der Reißfestigkeit und der Kerbschlagzähigkeit erreicht.

Bevorzugte Halbzeuge sind Tapes, diese sind bevorzugt unidirektional endlosfaserverstärkt. Bevorzugt hat das Tape eine Breite von 5 bis 600 mm und vorzugsweise eine Breite von 8 bis 300 mm, während die Dicke üblicherweise im Bereich von 0,05 bis 2 mm, vorzugsweise im Bereich von 0,1 bis 1 mm, mehr bevorzugt im Bereich von 0,125 bis 0,5 und besonders bevorzugt im Bereich von 0,15 bis 0,35 mm liegt.

Bevorzugte Composites bestehen aus endlosfaserverstärkten Tape Schichten, mit einer Anzahl an Einzelschichten von 1 bis 100, mehr bevorzugt von 5 bis 90 Einzelschichten, wobei das Composite durch Anwendung von Druck und erhöhter Temperatur gebildet wird, mehr bevorzugt durch Konsolidierung, wie in den Beispielen gezeigt, und wobei die Einzelschichten beliebige Faserorientierungen aufzeigen können.

Der zweite Aspekt der zugrundeliegenden Aufgabe wird gelöst durch einen weiteren Gegenstand der vorliegenden Erfindung, ein Thermoplastic Composite Pipe (TCP), das von innen nach außen folgende Komponenten enthält:
I. Einen rohrförmigen Liner, der ein- oder mehrschichtig ist und dessen äußere Oberfläche aus einer Polyamid- oder PVDF-Formmasse besteht;
II. eine Verstärkungslage aus einem Composite aus einer Polymermatrix und darin eingebetteten Endlosfasern, wobei die Polymermatrix zu mindestens 80 Gew-%, bevorzugt zu mindestens 85 Gew-%, besonders bevorzugt zu mindestens 90 Gew-% und insbesondere bevorzugt zu mindestens 95 Gew-% aus einer Mischung besteht, die folgende Komponenten enthält:
   a) als Hauptkomponente, das heißt zu mindestens 50 Gew.-Teilen niedrigviskoses PVDF sowie
   b) 1 bis 50 Gew.-Teile, bevorzugt 1,5 bis 40 Gew.-Teile, mehr bevorzugt 2 bis 30 Gew.-Teile, besonders bevorzugt 2,5 bis 20 Gew.-Teile und insbesondere bevorzugt 3 bis 10 Gew.-Teile eines Acrylatcopolymers, wobei das Acrylatcopolymer 1 bis 30 Gew.-%, bevorzugt 2 bis 25 Gew.-%, besonders bevorzugt 4 bis 20 Gew.-% und insbesondere bevorzugt 5 bis 15 Gew.-% Einheiten mit Carbonsäureanhydridgruppen enthält,
      wobei die Summe der Gew.-Teile von a) und b) 100 ergibt,
   und wobei weiterhin der Volumenanteil der Endlosfasern im Composite 10 bis 80 %, vorzugsweise 15 bis 75 %, mehr bevorzugt 20 bis 70 %, weiter mehr bevorzugt 25 bis 65 %, besonders bevorzugt 30 bis 60 %, und insbesondere bevorzugt 35 bis 55 % beträgt,
   wobei die Prozentangaben der Matrix und der Endlosfasern sich jeweils auf die Gesamtmasse bzw. Gesamtvolumen der Verstärkungslage beziehen;
III. gegebenenfalls eine weitere Verstärkungslage aus einem Composite aus einer Polyamidmatrix und darin eingebetteten Endlosfasern,
   wobei die Polyamidmatrix zu mindestens 80 Gew-%, bevorzugt zu mindestens 85 Gew-%, besonders bevorzugt zu mindestens 90 Gew-% und insbesondere bevorzugt zu mindestens 95 Gew-% aus Polyamid besteht,
   und wobei weiterhin der Volumenanteil der Endlosfasern im Composite 10 bis 80 %, vorzugsweise 15 bis 75 %, mehr bevorzugt 20 bis 70 %, weiter mehr bevorzugt 25 bis 65 %, besonders bevorzugt 30 bis 60 %, und insbesondere bevorzugt 35 bis 55 % beträgt,
IV. gegebenenfalls eine außenliegende Decklage aus einer polymeren Masse.
   wobei die Prozentangaben der Matrix und der Endlosfasern sich jeweils auf die Gesamtmasse bzw. Gesamtvolumen der Verstärkungslage beziehen;
   Bevorzugt ist die Schicht II eine Verstärkungslage aus dem erfindungsgemäßen Composite wie vorher beschrieben.

Der rohrförmige Liner besitzt in der Regel einen Innendurchmesser im Bereich von 10 bis 500 mm, vorzugsweise im Bereich von 12 bis 425 mm und besonders bevorzugt im Bereich von 15 bis 300 mm. Seine Wandstärke liegt in der Regel im Bereich von 2 bis 40 mm, vorzugsweise im Bereich von 2,5 bis 30 mm und besonders bevorzugt im Bereich von 3 bis 20 mm. Der Liner kann einschichtig oder mehrschichtig sein.

Bei der Herstellung des TCPs wird auf die äußere Oberfläche des Liners unter Anwendung eines Anpressdrucks das erfindungsgemäße Composite in Form eines Tapes aufgebracht. Der nötige Anpressdruck kann durch die Wickelspannung oder mittels eines Andruckkörpers erzielt werden. Hier werden in einer Ausführungsform beide Kontaktflächen angeschmolzen, beispielsweise mittels Infrarotstrahlung, Heißluft, Heißgas, Laserstrahlung, Mikrowellenstrahlung oder direkt durch Kontaktheizung. Die angeschmolzenen Kontaktflächen werden dann aneinander gepresst. Bis zum Erstarren der aufgeschmolzenen Bereiche sollte der Anpressdruck erhalten bleiben. In einer weiteren Ausführungsform wird das Tape aufgewickelt und dann von außen entweder indirekt oder aber direkt mittels eines beheizbaren Andruckkörpers aufgeschmolzen. Die Heizleistung muss so dosiert werden, dass hierbei auch die äußere Oberfläche des Liners anschmilzt. Danach wird der Anpressdruck bis zum Erstarren der angeschmolzenen Bereiche aufrechterhalten. Das Wickeln des Tapes sowie das Aufwickeln gegebenenfalls weiterer Tapelagen ist Stand der Technik. Auf die so erhaltene Struktur können gegebenenfalls auf die gleiche Weise eine oder mehrere Tapelagen mit einer Polyamidmatrix aufgebracht werden. Dies ist unter Umständen sinnvoll, weil der äußere Bereich des TCPs dem zu fördernden Medium und dessen Temperatur gegenüber weniger exponiert ist und man auf diese Weise die Materialkosten niedriger halten kann und das gesamte Rohr leichter ist. Polyamide sind dem Fachmann als sehr schlagzähe Polymere bekannt und bieten deshalb einen besseren und zusätzlichen Schutz gegenüber Umwelteinflüssen, weiterhin weist Polyamid eine niedrigere Dichte als PVDF auf.

Die gesamte Compositlage, also die Summe aller Tapelagen, liegt hierbei im Bereich von 1 bis 100 mm, vorzugsweise im Bereich von 5 bis 90 mm und besonders bevorzugt im Bereich von 10 bis 80 mm. Für unterschiedliche Tapelagen können unterschiedliche Tapegeometrien und Wickelwinkel eingesetzt werden. Die verwendeten Tapes können jeden geeigneten Querschnitt besitzen.

Um die äußere Tapelage zu schützen, kann gegebenenfalls zum Abschluss eine außenliegende Decklage aus einer polymeren Masse aufgebracht werden. Hierbei handelt es sich entweder um eine thermoplastische Formmasse oder um ein thermoplastisches oder vernetzbares oder vernetztes Elastomer. Vorzugsweise haftet die Decklage fest auf der äußeren Tapelage. In diesem Fall kann die Decklage beispielsweise mittels eines Querspritz-Extrusionskopfes aufgebracht und so stoffschlüssig mit der Tapelage verbunden werden. Die Haftung kann auch durch Vernetzen eines vernetzbaren Elastomers erzeugt werden.

Spezielle Designs des erfindungsgemäßen TCPs sind beispielsweise:
a) Liner aus einer Polyamidformmasse / erfindungsgemäße PVDF-Compositlage / Decklage aus einer Polyamidformmasse;
b) Liner aus einer PVDF-Formmasse / erfindungsgemäße PVDF-Compositlage / Decklage aus einer PVDF-Formmasse;
c) Liner aus einer PVDF-Formmasse / erfindungsgemäße PVDF-Compositlage / Decklage aus einer Polyamidformmasse;
d) Liner aus einer Polyamidformmasse / erfindungsgemäße PVDF-Compositlage / Decklage aus einer PVDF-Formmasse;
e) Zweischichtiger Liner mit einer Innenschicht aus einer Polyamidformmasse und einer Außenschicht aus einem PVDF-Acrylatcopolymer-Blend / erfindungsgemäße PVDF-Compositlage / Schicht aus einem PVDF-Acrylatcopolymer-Blend / Decklage aus einer Polyam idformmasse;
f) Zweischichtiger Liner mit einer Innenschicht aus einer Polyamidformmasse und einer Außenschicht aus einem PVDF-Acrylatcopolymer-Blend / erfindungsgemäße PVDF-Compositlage / Decklage aus einer PVDF-Formmasse;
g) Liner aus einer PVDF- oder einer Polyamidformmasse / erfindungsgemäße PVDF-Compositlage / Compositlage mit Polyamidmatrix / Decklage aus einer PVDF- oder einer Polyamidformmasse.

Das Acrylatcopolymer in den Designs e und f hat hierbei die gleiche Zusammensetzung, wie das Acrylatcopolymer b) des erfindungsgemäßen Composites.

Geeignete Polyamide sind beispielsweise PA6, PA66, PA610, PA88, PA8, PA612, PA810, PA108, PA9, PA613, PA614, PA812, PA128, PA1010, PA10, PA814, PA148, PA1012, PA11, PA1014, PA1212 und PA12 oder ein auf einem dieser Polyamide basierendes Polyetheramid oder Polyetheresteramid oder ein Polyphthalamid wie beispielsweise PA66/6T, PA6/6T, PA6T/MPMDT (MPMD steht für 2-Methylpentamethylendiamin), PA9T, PA10T, PA11T, PA12T, PA14T, PA6T/6I, PA6T/10T, PA6T/12, PA10T/11, PA10T/12 oder PA612/6T.

Vorteilhaft am erfindungsgemäßen TCP mit der Verstärkung aus dem erfindungsgemäßen Composite ist, dass die Polymermatrix durch Aufnahme von Kohlenwasserstoffen, Wasser oder Methanol weniger erweicht gegenüber einer Matrix aus Polyolefin oder Polyamid. Damit weist das erfindungsgemäße TCP gegenüber vergleichbaren Rohren aus Polyolefin oder Polyamid eine höhere Außendruckfestigkeit auf. Von besonderem Vorteil ist darüber hinaus die gute Faser-Matrix-Haftung, die wesentlich zur hohen Verstärkung und zur hohen Lebensdauer beiträgt. Als Maß für die Faser-Matrix-Haftung kann der Dreipunktbiegeversuch nach ASTM D2344 angesehen werden, wie in den Beispielen beschrieben.

Ein weiterer Vorteil der erfindungsgemäßen TCP ist, dass zwischen der erfindungsgemäßen PVDF-Compositlage und einer eventuell vorhandenen Polyamidlage keine zusätzliche Haftvermittlung notwendig ist.

Das erfindungsgemäße TCP eignet sich insbesondere für Offshoreanwendungen in der Öl- oder Gasförderung, etwa zum Transport der Produkte zu Plattformen, zum Anschluss an Stahlleitungen, als Transportleitung und insbesondere als Umbilical, als Riser, als Jumper Line, als Flowline, als Intervention Line, als Downline, als Injektionsleitung oder als Druckleitung. Es kann verwendet werden für den Transport von gegebenenfalls unter Druck stehenden Kohlenwasserstoffen oder deren Gemischen wie Rohöl, Rohgas, Triphase (also Öl-Gas-Wassergemisch), Processed Oil (schon teilweise am Meeresgrund aufgearbeitet), Processed Gas, Benzin oder Diesel, von Injektionsmedien wie Wasser (etwa zur Erhaltung des Drucks in der Kaverne), Ölfeldchemikalien, Methanol oder CO₂ sowie zur Führung von Hydraulikölen (beispielsweise für Aktoren am Meeresgrund). Darüber hinaus ist das erfindungsgemäße TCP auch als druckführende Leitung im Onshore-Bereich oder in anderen industriellen Anwendungen geeignet, insbesondere in solchen, in denen höhere unabhängig voneinander Wasserstoff oder Methyl Kräfte in Axialrichtung des Rohres kraftschlüssig zwischen Rohr und Anbindungselement übertragen werden müssen.

### Beispiele:

Tape bestehend aus 45 Vol.-% Kohlefasern (Grafil 34-700 D) in einer Polymermatrix, welche aus 95 Gew.-% eines niedrigviskosen Homo-PVDF (Solef 1006) gemischt mit 5 Gew.-% eines Acrylat Copolymeren, welches 10,1 Gew.-% Säureanhydride (IV), 2,9 Gew.-% Säuregruppen (III), 35 Gew.-% Imidgruppen (II) und 52 Gew.-% Methacrylatgruppen (I) aufweist ohne weitere Zusätze hergestellt wurde.

Nach Konsolidierung acht unidirektionaler Lagen des obigen Tapes zum Halbzeuges (10 bar, 240 °C, 5 Minuten Haltezeit) wurde gemäß ASTM D2344 an planaren Prüfkörpern die interlaminare Scherfestigkeit mit 59 MPa bestimmt.

An den Prüfkörpern wurde bis zum angegebenen Wert keine Ablösung der Matrix von den Kohlefasern beobachtet, damit gibt dieser Test eine Aussage zur Haftung von Matrix und Endlosfasern.

Zum Vergleich wurde ein Halbzeug analog zum Ausführungsbeispiel aufgebaut, jedoch ohne Verwendung eines Acrylatcopolymers. Nach vergleichbarer Konsolidierung des Halbzeuges wurde gemäß ASTM D2344 die interlaminare Scherfestigkeit mit 17 MPa bestimmt.

## Patentansprüche

1. Composite aus einer Polymermatrix und darin eingebetteten Endlosfasern, wobei die Polymermatrix zu mindestens 80 Gew-% aus einer Mischung besteht, die folgende Komponenten enthält:
a) als Hauptkomponente, das heißt zu mindestens 50 Gew.-Teilen niedrigviskoses PVDF sowie
b) 1 bis 50 Gew.-Teile eines Acrylatcopolymers, wobei das Acrylatcopolymer 1 bis 30 Gew.-% Einheiten mit Carbonsäureanhydridgruppen enthält,
wobei die Summe der Gew.-Teile von a) und b) 100 ergibt, und
wobei weiterhin der Volumenanteil der Endlosfasern im Composite 10 bis 80 % beträgt, wobei die Prozentangaben der Matrix und der Endlosfasern sich jeweils auf die Gesamtmasse bzw. Gesamtvolumen der Verstärkungslage beziehen.

2. Composite gemäß Anspruch 1 **dadurch gekennzeichnet, dass** das PVDF ein Homopolymer oder ein Copolymer ist.

3. Composite gemäß einem der vorhergehenden Ansprüche **dadurch gekennzeichnet, dass** das Acrylatcopolymer folgende Einheiten enthält:
I. 14 bis 80 Gew.-% Estereinheiten der Formel 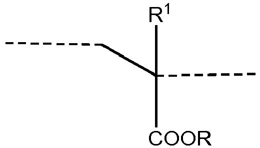 mit R = Methyl, Ethyl, Propyl oder Butyl, R¹ = Wasserstoff oder Methyl;
II. 10 bis 75 Gew.-% Imideinheiten der Formel 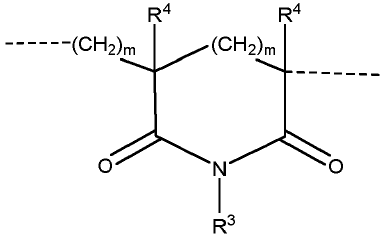
mit R⁴ unabhängig voneinander aliphatische oder alicyclische Reste mit 1 bis 8 C-Atomen, bevorzugt mit 1 bis 4 C-Atomen, mehr bevorzugt Wasserstoff oder Methyl, und
R³ unabhängig voneinander Methyl, Ethyl, Propyl, Butyl oder Phenyl;
m ist gleich 0 oder 1;
III. 1 bis 20 Gew.-% Säureeinheiten der Formel 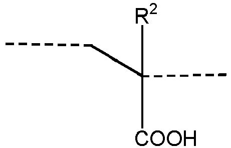 mit R² = Wasserstoff oder Methyl;
IV. 1 bis 30 Gew.-% Säureanhydrideinheiten der Formel 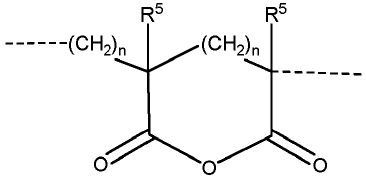
mit R⁵ unabhängig voneinander aliphatische oder alicyclische Reste mit 1 bis 8 C-Atomen;
n ist gleich 0 oder 1;
wobei die Einheiten nach I, II, III und IV in der Summe 100 Gew.-% ergeben.

4. Composite gemäß einem der vorhergehenden Ansprüche **dadurch gekennzeichnet, dass** es ein unidirektional endlosfaserverstärktes Tape ist.

5. Langfaserverstärktes Stäbchengranulat mit einer Länge von 4 bis 60 mm, hergestellt durch Schneiden eines strangförmigen Composites gemäß einem der vorhergehenden Ansprüche.

6. Thermoplastic Composite Pipe (TCP), das von innen nach außen folgende Komponenten enthält:
I. Einen rohrförmigen Liner, der ein- oder mehrschichtig ist und dessen äußere Oberfläche aus einer Polyamid- oder PVDF-Formmasse besteht;
II. eine Verstärkungslage aus einem Composite aus einer Polymermatrix und darin eingebetteten Endlosfasern, wobei die Polymermatrix zu mindestens 80 Gew-% aus einer Mischung besteht, die folgende Komponenten enthält:
a) 50 bis 99 Gew.-Teile PVDF sowie
b) 1 bis 50 Gew.-Teile eines Acrylatcopolymers, das 1 bis 30 Gew.-% Einheiten mit Carbonsäureanhydridgruppen enthält,
wobei die Summe der Gew.-Teile von a) und b) 100 ergibt und
wobei der Volumenanteil der Endlosfasern im Composite 10 bis 80 % beträgt,
wobei die Prozentangaben der Matrix und der Endlosfasern sich jeweils auf die Gesamtmasse bzw. Gesamtvolumen der Verstärkungslage beziehen;
III. gegebenenfalls eine weitere Verstärkungslage aus einem Composite aus einer Polyamidmatrix und darin eingebetteten Endlosfasern, wobei die Polyamidmatrix zu mindestens 80 Gew-% aus Polyamid besteht und wobei weiterhin der Volumenanteil der Endlosfasern im Composite 10 bis 80 % beträgt;
IV. gegebenenfalls eine außenliegende Decklage aus einer polymeren Masse. wobei die Prozentangaben der Matrix und der Endlosfasern sich jeweils auf die Gesamtmasse bzw. Gesamtvolumen der Verstärkungslage beziehen;

7. Thermoplastic Composite Pipe gemäß Anspruch 6 **dadurch gekennzeichnet, dass** das Design des TCP aus der folgenden Gruppe ausgewählt ist:
a) Liner aus einer Polyamidformmasse / erfindungsgemäße PVDF-Compositlage / Decklage aus einer Polyamidformmasse;
b) Liner aus einer PVDF-Formmasse / erfindungsgemäße PVDF-Compositlage / Decklage aus einer PVDF-Formmasse;
c) Liner aus einer PVDF-Formmasse / erfindungsgemäße PVDF-Compositlage / Decklage aus einer Polyamidformmasse;
d) Liner aus einer Polyamidformmasse / erfindungsgemäße PVDF-Compositlage / Decklage aus einer PVDF-Formmasse;
e) Zweischichtiger Liner mit einer Innenschicht aus einer Polyamidformmasse und einer Außenschicht aus einem PVDF-Acrylatcopolymer-Blend / erfindungsgemäße PVDF-Compositlage / Schicht aus einem PVDF-Acrylatcopolymer-Blend / Decklage aus einer Polyam idformmasse;
f) Zweischichtiger Liner mit einer Innenschicht aus einer Polyamidformmasse und einer Außenschicht aus einem PVDF-Acrylatcopolymer-Blend / erfindungsgemäße PVDF-Compositlage / Decklage aus einer PVDF-Formmasse;
g) Liner aus einer PVDF- oder einer Polyamidformmasse / erfindungsgemäße PVDF-Compositlage / Compositlage mit Polyamidmatrix / Decklage aus einer PVDF- oder einer Polyam idformmasse.

8. Thermoplastic Composite Pipe gemäß einem der Ansprüche 6 und 7 **dadurch gekennzeichnet, dass** das TCP ein Umbilical, ein Riser, eine Jumper Line, eine Flowline, eine Intervention Line, eine Downline, eine Injektionsleitung oder eine Druckleitung ist.

9. Verwendung des Thermoplastic Composite Pipes gemäß einem der Ansprüche 6 bis 8 für den Transport von Rohöl, Rohgas, Triphase, Processed Oil, Processed Gas, Benzin oder Diesel, Injektionsmedien, oder zur Führung von Hydraulikölen.

## Claims

1. Composite composed of a polymer matrix and continuous fibres embedded therein, where the polymer matrix consists to an extent of at least 80% by weight of a mixture comprising the following components:
a) low-viscosity PVDF as the main component, i.e. to an extent of at least 50 parts by weight, and
b) 1 to 50 parts by weight of an acrylate copolymer, where the acrylate copolymer contains 1% to 30% by weight of units having carboxylic anhydride groups, where the sum total of the parts by weight of a) and b) is 100, and
where the proportion by volume of the continuous fibres in the composite is also 10% to 80% by weight,
where the percentages of the matrix and of the continuous fibres are each based on the total mass or total volume of the reinforcing ply.

2. Composite according to Claim 1, **characterized in that** the PVDF is a homopolymer or a copolymer.

3. Composite according to either of the preceding claims, **characterized in that** the acrylate copolymer comprises the following units:
I. 14% to 80% by weight of ester units of the formula 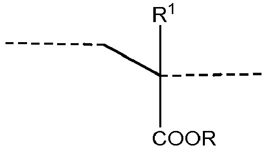 with R = methyl, ethyl, propyl or butyl, R¹ = hydrogen or methyl;
II. 10% to 75% by weight of imide units of the formula 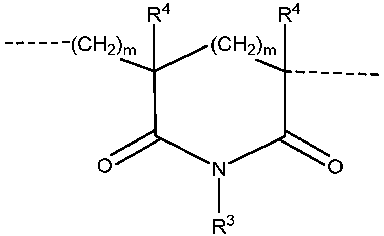 with R⁴ = independently aliphatic or alicyclic radicals having 1 to 8 carbon atoms, preferably having 1 to 4 carbon atoms, more preferably hydrogen or methyl, and R^{3 =} independently methyl, ethyl, propyl, butyl or phenyl; m = 0 or 1;
III. 1% to 20% by weight of acid units of the formula 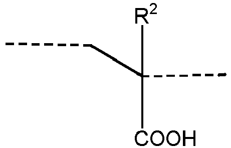 with R² = hydrogen or methyl;
IV. 1% to 30% by weight of acid anhydride units of the formula 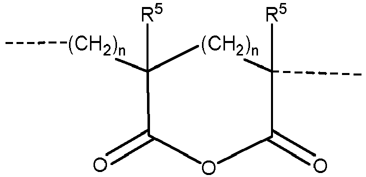
with R⁵ = independently aliphatic or alicyclic radicals having 1 to 8 carbon atoms;
n = 0 or 1;
where the units I, II, III and IV add up to a total of 100% by weight.

4. Composite according to any of the preceding claims, **characterized in that** it is a unidirectionally continuous fibre-reinforced tape.

5. Elongate long-fibre-reinforced pellets having a length of 4 to 60 mm, produced by cutting a composite in strand form according to any of the preceding claims.

6. Thermoplastic composite pipe (TCP) comprising the following components from the inside outward:
I. a tubular liner having one or more layers, the outer surface of which consists of a polyamide moulding compound or PVDF moulding compound;
II. a reinforcing ply composed of a composite consisting of a polymer matrix and continuous fibres embedded therein, where the polymer matrix consists to an extent of at least 80% by weight of a mixture comprising the following components:
a) 50 to 99 parts by weight of PVDF and
b) 1 to 50 parts by weight of an acrylate copolymer containing 1% to 30% by weight of units having carboxylic anhydride groups,
where the sum total of the parts by weight of a) and b) is 100 and
where the proportion by volume of the continuous fibres in the composite is 10% to 80% by weight where the percentages of the matrix and of the continuous fibres are each based on the total mass or total volume of the reinforcing ply;
III. optionally a further reinforcing ply of a composite composed of a polyamide matrix and continuous fibres embedded therein, where the polyamide matrix consists to an extent of at least 80% by weight of polyamide and where the proportion by volume of the continuous fibres in the composite is additionally 10% to 80%;
IV. optionally an outer cover ply composed of a polymeric material,
where the percentages of the matrix and of the continuous fibres are each based on the total mass or total volume of the reinforcing ply.

7. Thermoplastic composite pipe according to Claim 6, **characterized in that** the design of the TCP is selected from the following group:
a) liner of a polyamide moulding compound / inventive PVDF composite layer / cover ply of a polyamide moulding compound;
b) liner of a PVDF moulding compound / inventive PVDF composite layer / cover ply of a PVDF moulding compound;
c) liner of a PVDF moulding compound / inventive PVDF composite layer / cover ply of a polyamide moulding compound;
d) liner of a polyamide moulding compound / inventive PVDF composite layer / cover ply of a PVDF moulding compound;
e) two-layer liner with an inner layer of a polyamide moulding compound and an outer layer of a PVDF/acrylate copolymer blend / inventive PVDF composite layer / layer of a PVDF/acrylate copolymer blend / cover ply of a polyamide moulding compound;
f) two-layer liner with an inner layer of a polyamide moulding compound and an outer layer of a PVDF/acrylate copolymer blend / inventive PVDF composite layer / cover ply of a PVDF moulding compound;
g) liner of a PVDF or polyamide moulding compound / inventive PVDF composite layer / composite layer with polyamide matrix / cover ply of a PVDF or polyamide moulding compound.

8. Thermoplastic composite pipe according to either of Claims 6 and 7, **characterized in that** the TCP is an umbilical, a riser, a jumper line, a flowline, an intervention line, a downline, an injection line or a pressure line.

9. Use of the thermoplastic composite pipe according to any of Claims 6 to 8 for the transport of crude oil, crude gas, triphase, processed oil, processed gas, gasoline or diesel, injection media, or for conduction of hydraulic oils.

## Revendications

1. Composite d'une matrice de polymère et de fibres continues incorporées dans celle-ci, la matrice de polymère étant constituée à hauteur d'au moins 80 % en poids par un mélange, qui contient les composants suivants :
a) en tant que composant principal, c'est-à-dire à hauteur d'au moins 50 parties en poids, du PVDF faiblement visqueux, ainsi que
b) 1 à 50 parties en poids d'un copolymère d'acrylate, le copolymère d'acrylate contenant 1 à 30 % en poids d'unités munies de groupes anhydride d'acide carboxylique,
la somme des parties en poids de a) et b) étant de 100, et
en outre, la proportion volumique des fibres continues dans le composite étant de 10 à 80 %,
les indications de pourcentage de la matrice et des fibres continues se rapportant à chaque fois à la masse totale ou au volume total de la couche de renforcement.

2. Composite selon la revendication 1, **caractérisé en ce que** le PVDF est un homopolymère ou un copolymère.

3. Composite selon l'une quelconque des revendications précédentes, **caractérisé en ce que** le copolymère d'acrylate contient les unités suivantes :
I. 14 à 80 % en poids d'unités ester de la formule 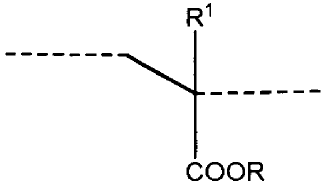 avec R = méthyle, éthyle, propyle ou butyle, R¹ = hydrogène ou méthyle ;
II. 10 à 75 % en poids d'unités imide de la formule 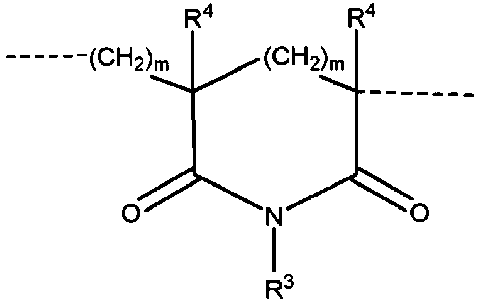
avec les R⁴ indépendamment les uns des autres des radicaux aliphatiques ou alicycliques de 1 à 8 atomes C, de préférence de 1 à 4 atomes C, de manière davantage préférée hydrogène ou méthyle, et
les R³ indépendamment les uns des autres méthyle, éthyle, propyle, butyle ou phényle ;
m valant 0 ou 1 ;
III. 1 à 20 % en poids d'unités acide de la formule 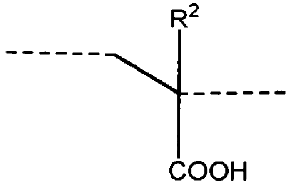 avec R² = hydrogène ou méthyle ;
IV. 1 à 30 % en poids d'unités anhydride d'acide de la formule 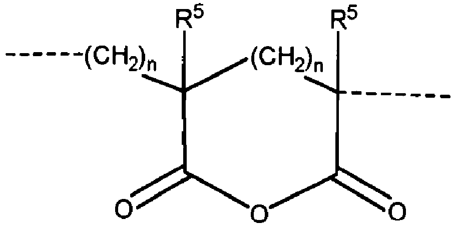
avec les R⁵ indépendamment les uns des autres des radicaux aliphatiques ou alicycliques de 1 à 8 atomes C ;
n valant 0 ou 1 ;
la somme des unités selon I, II, III et IV étant de 100 % en poids.

4. Composite selon l'une quelconque des revendications précédentes, **caractérisé en ce qu'**il consiste en un ruban renforcé de manière unidirectionnele par des fibres continues.

5. Granulat de bâtonnets renforcé par des fibres longues d'une longueur de 4 à 60 mm, fabriqué par découpe d'un composite en forme de boudin selon l'une quelconque des revendications précédentes.

6. Tuyau composite thermoplastique (TCP), qui contient de l'intérieur vers l'extérieur les composants suivants :
I. un revêtement intérieur tubulaire, qui est mono- ou multicouche et dont la surface extérieure est constituée par un matériau de moulage de polyamide ou de PVDF ;
II. une couche de renforcement en un composite d'une matrice de polymère et de fibres continues incorporées dans celle-ci, la matrice de polymère étant constituée à hauteur d'au moins 80 % en poids par un mélange, qui contient les composants suivants :
a) 50 à 99 parties en poids de PVDF, ainsi que
b) 1 à 50 parties en poids d'un copolymère d'acrylate, qui contient 1 à 30 % en poids d'unités munies de groupes anhydride d'acide carboxylique,
la somme des parties en poids de a) et b) étant de 100, et
en outre, la proportion volumique des fibres continues dans le composite étant de 10 à 80 %,
les indications de pourcentage de la matrice et des fibres continues se rapportant à chaque fois à la masse totale ou au volume total de la couche de renforcement ;
III. éventuellement une couche de renforcement supplémentaire en un composite d'une matrice de polyamide et de fibres continues incorporées dans celle-ci, la matrice de polyamide étant constituée à hauteur d'au moins 80 % en poids par du polyamide et, en outre, la proportion volumique des fibres continues dans le composite étant de 10 à 80 % ;
IV. éventuellement une couche de recouvrement extérieure en un matériau polymère,
les indications de pourcentage de la matrice et des fibres continues se rapportant à chaque fois à la masse totale ou au volume total de la couche de renforcement.

7. Tuyau composite thermoplastique selon la revendication 6, **caractérisé en ce que** la structure du TCP est choisie dans le groupe suivant :
a) revêtement intérieur en un matériau de moulage de polyamide/couche de composite de PVDF selon l'invention/couche de recouvrement en un matériau de moulage de polyamide ;
b) revêtement intérieur en un matériau de moulage de PVDF/couche de composite de PVDF selon l'invention/couche de recouvrement en un matériau de moulage de PVDF ;
c) revêtement intérieur en un matériau de moulage de PVDF/couche de composite de PVDF selon l'invention/couche de recouvrement en un matériau de moulage de polyamide ;
d) revêtement intérieur en un matériau de moulage de polyamide/couche de composite de PVDF selon l'invention/couche de recouvrement en un matériau de moulage de PVDF ;
e) revêtement intérieur bicouche muni d'une couche intérieure en un matériau de moulage de polyamide et d'une couche extérieure en un mélange de PVDF-copolymère d'acrylate/couche de composite de PVDF selon l'invention/couche en un mélange de PVDF-copolymère d'acrylate/couche de recouvrement en un matériau de moulage de polyamide ;
f) revêtement intérieur bicouche muni d'une couche intérieure en un matériau de moulage de polyamide et d'une couche extérieure en un mélange de PVDF-copolymère d'acrylate/couche de composite de PVDF selon l'invention/couche de recouvrement en un matériau de moulage de PVDF ;
g) revêtement intérieur en un matériau de moulage de PVDF ou de polyamide/couche de composite de PVDF selon l'invention/couche de composite munie d'une matrice de polyamide/couche de recouvrement en un matériau de moulage de PVDF ou de polyamide.

8. Tuyau composite thermoplastique selon l'une quelconque des revendications 6 et 7, **caractérisé en ce que** le TCP est un ombilical, une colonne montante, une conduite de raccordement, une conduite d'écoulement, une conduite d'intervention, une conduite descendante, une conduite d'injection ou une conduite sous pression.

9. Utilisation du tuyau composite thermoplastique selon l'une quelconque des revendications 6 à 8 pour le transport de pétrole brut, de gaz brut, de mélange triphasé, de pétrole traité, de gaz traité, d'essence ou de diesel, de milieux d'injection, ou pour l'acheminement d'huiles hydrauliques.
